# EUROPEAN PATENT APPLICATION

(11) **EP 2 911 136 A1**
(43) Date of publication of application: **26.08.2015**
(21) Application number: 14156343.7
(22) Date of filing: 24.02.2014
(51) Int. Cl.: G09B 19/00

(54) **Providing an and audio and/or video component for computer-based learning**

(71) Applicant: Eopin Oy, 02620 Espoo (FI)
(72) Inventor: HEIKKILÄ, Merja, 02620 Espoo (FI); HEIKKILÄ, Pauli, 02620 Espoo (FI)
(74) Representative: Berggren Oy Ab

(57) **Abstract**

A technique for generating a composite audio or video file for reproduction to a user as an audio or video component of a learning session for computer-based learning is provided. According to an example embodiment, the technique involves receiving a userdefinable preferred duration for the learning session and selecting one or more learning items from a database of learning items for said learning session in accordance with a selection rule. Each learning item of the database is provided at least with an audio or video item representing audio or video associated therewith and a status indication for indicating one of inclusion in or exclusion from the learning session. The selection rule is arranged to select learning items that are currently not indicated for exclusion from the learning session in a selection order until reaching a combined duration of audio or video items that matches the preferred duration. The audio or video items associated with the selected learning items are arranged, in the order they have been selected, into the composite audio or video file for reproduction to the user as the audio or video component of the learning session.

## Description

### FIELD OF THE INVENTION

The example and non-limiting embodiments of the present invention relate to computer-based learning. In particular, the example and non-limiting embodiments of the present invention relate to a technique for selecting audio and/or video content for presentation to a user as an audio component and/or as a video component of a computer-based learning session.

### BACKGROUND

Use of electronic media, computers and communication technologies in learning and education is continuously gaining popularity. Such learning or education approaches may be referred to as E-learning or computer-based learning. Computer-based learning may make use of various types of media, e.g. a combination of one or more of text, audio, (still) images, video streams.

Computer based learning provides interesting possibilities for self-paced self-study of various topics independently of time and place. Computer-based learning may make use of resources (e.g. the media presented to a user as part of the learning material) that are made locally available in a user's personal device (e.g. a mobile phone, a smartphone, a tablet computer, a laptop computer, a desktop computer, etc.) and/or that are remotely accessible via a computer network such as the Internet by the user's personal device.

Language learning, in particular the study of a foreign language, is an example of a topic that is particularly suited for self-study using computer-based learning. In this regard, the learning items may be presented to the user as audio, as text, as images or as a combination thereof, thereby enabling a learning experience making use of various stimuli, making the approach suitable for wide variety of age groups and starting levels.

However, known techniques and/or learning materials available for learning a foreign language using computer-based learning are typically provided as a fixed set of audio material that cannot be tailored to a specific use by a specific user. Consequently, e.g. the content, the structure and the presentation order of the audio material remains the same regardless of the user and repeatedly going through the same material is likely to degrade both the learning motivation and the result of the learning. Moreover, in case the user prefers learning in several short sessions instead of a single session or instead of only a few longer sessions, the fixed set of audio material provides very little flexibility for conveniently concentrating on pieces of the audio material the user currently finds interesting, important or otherwise worth the further study.

While discussed above with references to learning of a foreign language, similar challenges are typical for any computer-based learning scenario that makes use of pre-prepared audio materials.

### BRIEF SUMMARY

It is an object of the present invention to provide a technique that enables generating audio-visual material for computer-based learning in a flexible manner.

According to an example embodiment, an apparatus for generating a composite audio or video file for reproduction to a user as an audio or video component of a learning session is provided, the apparatus comprising at least one processor and at least one memory including computer program code for one or more programs, the at least one memory and the computer program code configured to, with the at least one processor, cause the apparatus at least to receive a user-definable preferred duration for the learning session, select one or more learning items from a database of learning items for said learning session in accordance with a predetermined selection rule, wherein each learning item of the database is provided at least with an audio or video item representing audio or video associated therewith and a status indication for indicating one of inclusion in or exclusion from the learning session, which predetermined selection rule is arranged to select learning items that are currently not indicated for exclusion from the learning session in a predefined selection order until reaching a combined duration of audio or video items that matches the preferred duration, and arrange the audio or video items associated with the selected learning items, in the order they have been selected, into the composite audio or video file for reproduction to the user as the audio or video component of the learning session.

According to another example embodiment, a method for generating a composite audio or video file for reproduction to a user as an audio or video component of a learning session is provided, the method comprising receiving a user-definable preferred duration for the learning session, selecting one or more learning items from a database of learning items for said learning session in accordance with a predetermined selection rule, wherein each learning item of the database is provided at least with an audio or video item representing audio or video associated therewith and a status indication for indicating one of inclusion in or exclusion from the learning session, which predetermined selection rule is arranged to select learning items that are currently not indicated for exclusion from the learning session in a predefined selection order until reaching a combined duration of audio or video items that matches the preferred duration, and arranging the audio or video items associated with the selected learning items, in the order they have been selected, into the composite audio or video file for reproduction to the user as the audio or video component of the learning session.

According to another example embodiment, a computer program for generating a composite audio or video file for reproduction to a user as an audio or video component of a learning session is provided, the computer program including one or more sequences of one or more instructions which, when executed by one or more processors, cause an apparatus at least to receive a user-definable preferred duration for the learning session, select one or more learning items from a database of learning items for said learning session in accordance with a predetermined selection rule, wherein each learning item of the database is provided at least with an audio or video item representing audio or video associated therewith and a status indication for indicating one of inclusion in or exclusion from the learning session, which predetermined selection rule is arranged to select learning items that are currently not indicated for exclusion from the learning session in a predefined selection order until reaching a combined duration of audio or video items that matches the preferred duration, and arrange the audio or video items associated with the selected learning items, in the order they have been selected, into the composite audio or video file for reproduction to the user as the audio or video component of the learning session.

The computer program referred to above may be embodied on a volatile or a non-volatile computer-readable record medium, for example as a computer program product comprising at least one computer readable non-transitory medium having program code stored thereon, the program which when executed by an apparatus cause the apparatus at least to perform the operations described hereinbefore for the computer program according to an example embodiment of the invention.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings.
Figure 1 schematically illustrates an exemplifying structure of audio material suitable for language learning using computer-based learning approach according to an example embodiment.
Figure 2 schematically illustrates some components of an exemplifying graphical user interface (GUI) window that may be employed to control operation of the language learning application according to an example embodiment.
Figures 3a to 3b schematically illustrate GUI windows that provide an examples of inclusion statuses of learning items according to an example embodiment.
Figure 4 illustrates a method according to an example embodiment.
Figure 5 schematically illustrates some components of an exemplifying computer apparatus according to an example embodiment.

### DETAILED DESCRIPTION OF SOME EMBODIMENTS

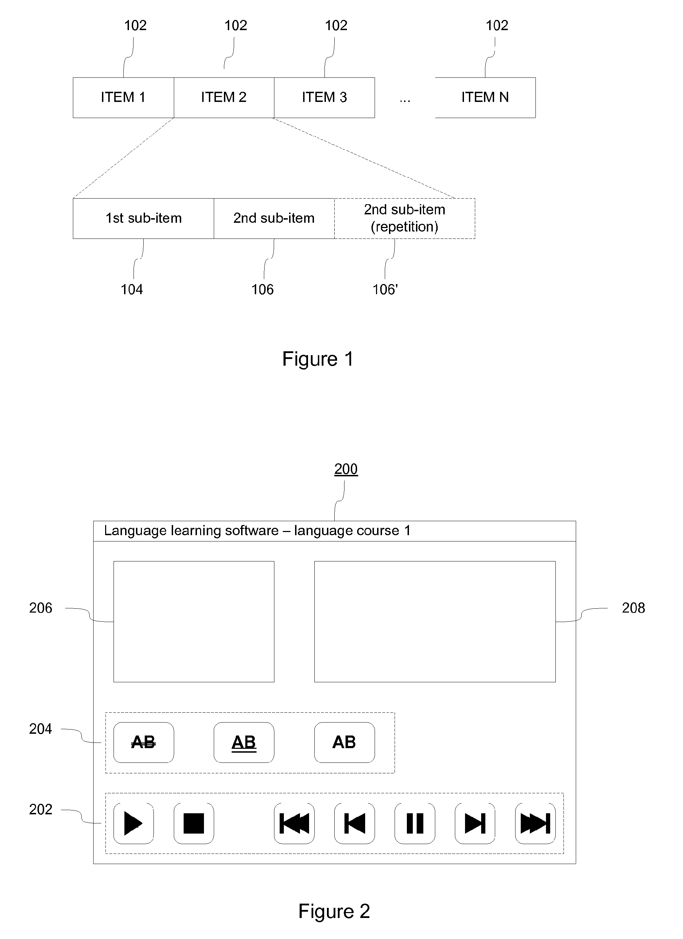

Figure 1 schematically illustrates an exemplifying structure of audio material suitable for language learning using computer-based learning approach, especially for learning of a foreign language. The audio material is provided as a sequence of audio items 102, each representing a learning item. Each audio item comprises a first audio sub-item 104 and a second audio sub-item 106. The first audio sub-item 104 represents the information content associated with the respective learning item in a source language, and the second audio sub-item 106 represents the information content associated with the respective learning item in a target language. The second audio sub-item 106 may be optionally repeated one or more times, which is indicated Figure 1 as an optional audio sub-item 106'. Hence, for each learning item the information content associated therewith is first reproduced in a source language (104), followed by the content of the learning item reproduced in a target language one or more times (106, 106'). There may be short pause(s) between the audio sub-items 104, 106 of the audio item 102. Alternatively or additionally, there may be a (longer) pause between consecutive audio items 102.

The source language is a language familiar to a user, typically his/her mother tongue, whereas the target language is the language the user is studying with the help of the audio material. It should be noted, however, that the above structure of the audio items 102 serves as a non-limiting example and hence, for example, a different structure or presentation order of audio sub-items 104, 106 may be applied instead. As an example in this regard, the audio material may comprise audio items 102 where the audio sub-item 106 in the target language may be provided before the corresponding audio sub-item 104 in the source language. As a further example, the audio material may comprise a mixture of audio items 102 of different type or structure, e.g. a mixture of audio items 102 where the audio sub-item 104 in the source language precedes the corresponding audio sub-item 106 in the target language and audio items 102 where the audio sub-item 106 in the target language precedes the corresponding audio sub-item 104 in the source language.

The information content of the learning items, and hence the information content reproduced in the audio sub-items 104, 106 may comprise, for example, a single word, a combination of words (e.g. an expression or an idiom), a full sentence or a combination of two or more full sentences. Typically, the audio material for learning a foreign language comprises a mixture of learning items of different type, e.g. single words, combinations of words, full sentences and/or combinations of two or more full sentences. Moreover, the learning items are typically, although not necessarily, included in the audio material reproduced to a user in an order that facilitates effective learning of applied language concepts. This may involve, for example, arranging the learning items in increasing order of difficulty in order to facilitate first learning relatively simple aspects (e.g. single words) before proceeding into more complex topics (e.g. expressions and/or full sentences that possibly make use of the single words provided earlier in the audio material). Alternatively or additionally, the presentation order may involve presenting the learning items in a sequence that provides or supports providing a semantically logical sequence of learning items e.g. provides or supports providing a storyline formed by two or more learning items reproduced in a sequence.

The audio material for a given pair of source and target languages in its entirety typically comprises a relatively long sequence of audio items 102, possibly including tens or even hundreds of audio items 102. This may result in the overall duration of tens of minutes or even several hours. Digesting such quantity of learning material as a single learning session is typically infeasible and/or is likely to degrade the learning performance due to the user fatigue. Moreover, allocating time for a long learning session may be a challenge for many users. Consequently, it is advantageous to enable division of the audio material into a number of shorter learning sessions to enhance learning performance and/or to facilitate allocating time for the learning process. An exemplifying approach for managing such division of the audio material into sessions will be described in detail later in this text.

Instead of or in addition to the audio material, video material suitable for language learning in context of a computer-based learning approach may be provided. Hence, although the arrangement of the learning items into a sequence is described in the foregoing with references to audio material, similar considerations are valid also for video material. While the video material may be provided without corresponding audio material, typically the representation includes both the audio material and the corresponding video material. As another variation, the audio material may be accompanied by image material, such that for each learning item there is also an image descriptive of the information content of the respective learning item. Consequently, when representing the learning material to a user, the image descriptive of the information content of a learning item is displayed to the user simultaneously with reproduction of the audio item representing the same information content.

While described herein by using the language learning as an example, this approach generalizes into any computer-based learning that involves listening to audio material and/or viewing video material that represent information content of the learning items under study. In general case, the audio material (and/or video material) comprises a sequence of audio items 102 (and/or video items) for reproduction to the user, where each audio item 102 (and/or video item) comprises a stimulus (corresponding to the audio sub-item 104 in the source language) followed by a desired response (corresponding to the audio sub-item 106 in the target language), possibly repeated a number of times. Nevertheless, for clarity and brevity of description, embodiments of the present invention are described in the following by using the language learning as an exemplifying (but non-limiting) context for the audio and/or video material. Moreover, in the following the term audio-visual material is used to refer to audio material, to video material or material comprising both the audio and video components.

A computer-based language learning approach that makes use of the audio-visual material described in the foregoing may be provided e.g. as a language learning application arranged to cause a computer apparatus to carry out operations that provide the language learning service to the user. Such software typically provides, via a display of the computer apparatus, the user with a graphical user interface (GUI). The GUI enables the user to apply an input device of the computer apparatus (e.g. a keyboard, a mouse, a touchscreen, a touchpad, etc.) to control operation of the language learning application.

The language learning application may use the audio-visual material as the only media supporting the learning process. However, the language learning application may apply a combination of other media together with the audio-visual material to provide more versatile - and often also more effective-learning experience. As an example, the language learning application may be arranged to cause the GUI to display, simultaneously with reproduction of a learning item as audio-visual material, the information content of the learning item in writing and/or an image descriptive of the content of the learning item. As an example, the information content may be displayed in writing in the source language simultaneously with reproduction of the audio sub-item 104 (and/or the corresponding video sub-item) in the source language and displayed in writing in the target language simultaneously with the reproduction of the audio sub-item 106 (and/or the corresponding video sub-item) in the target language. As another example with regards displaying the information content in writing, the GUI may provide the user with a possibility to select whether the information content in writing is to be displayed or not, and furthermore whether it is to be displayed in the source language, in the target language or both in the source language and in the target language.

The language learning application is, typically, capable of providing language learning between a number of source and target languages. A certain language learning material and a certain pair of a source language and a target language is herein referred to as a language course. In this regard, the language learning application is provided with means for obtaining the user's selection of the language course from a number of language courses. The selection may be made via the GUI, e.g. such that the language learning application is arranged to cause displaying a list of available language courses to the user, to receive user's selection of the language course and to apply the language course selected by the user.

The language learning application is, preferably, capable of providing the language course as a number of learning sessions. Each learning session includes one more learning items 102 constructed on basis of the audio items pertaining to the source and target languages of the language course. The selection of the learning items for a given learning session is made in accordance with a selection rule. The selection rule, possibly together with further rules and user preferences, enables automatically defining a learning session, which matches user preferences with regards to its content and duration and which serves as a stand-alone learning event independently of other learning sessions that may be selected or defined on basis of the available learning items. Examples of the selection rule and further rules that may be applied to select learning items for a learning session will be described in detail later in this text.

Figure 2 schematically illustrates some components of an exemplifying GUI window 200 that may be employed to control operation of the language learning application. The GUI window 200 may be arranged to occupy the display of the computer apparatus in full or it may occupy a sub-portion of the display.

The GUI window 200 may be provided e.g. as a window of a window-based operating system/environment or as a corresponding visual element.

The GUI window 200 comprises session control buttons 202 for controlling the flow of the current language learning session (in short, a learning session). The current learning session is the learning session of the language course currently being studied or study of which is ready to be started. In this context, a reference is made also to a current learning item, which is the learning item of the current learning session that is currently being studied or study of which is about to start. The session control buttons 202 comprise (from left to right in the illustration of Figure 2) a control button for starting the current learning session, a control button for stopping the current learning session, a control button for re-starting the current chapter within a learning session, a control button for re-starting the current learning item, a control button for pausing the current learning session, a control button for moving to the beginning of the next learning item, and a control button for moving to the end of the current chapter within the learning session. The set of session control buttons 202 illustrated in Figure 2 serve as a non-limiting example, and the session control buttons 202 may comprise e.g. only some of the control buttons described herein and/or further control buttons in addition to those described herein.

The GUI window 200 comprises learning item control buttons 204 for user-initiated controlling the handling of the learning items in the current learning session and/or subsequent learning sessions of the same language course. The learning item control buttons 204 of this example (from left to right in the illustration of Figure 2) comprise a control button for marking the current learning item for exclusion from a subsequent learning session, a control button for making the current learning item for inclusion in a subsequent learning session and a control button for restoring the default setting for the current learning item with regards its inclusion in or exclusion from a subsequent learning session. In this context, the default setting indicates the inclusion or exclusion in accordance with an inclusion rule or an exclusion rule that will be described later in this text in detail. The set of learning item control buttons 204 illustrated in Figure 2 serves as a non-limiting example, and the learning item control buttons 204 may comprise e.g. only some of the control buttons described herein and/or further control buttons in addition to those described herein.

The GUI window 200 may further comprise a sub-window 206 for displaying visual material associated with the current learning item. As an example in this regard, the sub-window 206 may be applied to display video items (and/or video sub-items) descriptive of the information content of the current learning item. As another example, the sub-window 206 may be applied to display images descriptive of the content of the current learning item. The GUI window 200 may further comprise a sub-window 208 for displaying the information content of the current learning item in writing. This may involve displaying the information content in the source language, in the target language or both, as described in the foregoing.

The GUI window 200 may further comprise a number of further elements that facilitate controlling operation of the language learning application, e.g. control of the language course selection, control of the audio-visual material selection and control of the language learning application in general.

The audio and/or video material pertaining to a certain (source or target) language may be provided as a set of individual audio and/or video items, which may be combined to other audio or video items to construct a corresponding audio-visual item (e.g. an audio item 102). Alternatively or additionally, the audio and/or video items for a certain language course, i.e. for a certain language learning material and a certain pair of source and target languages, may be provided as pre-constructed audio-visual items, e.g. as audio items 102 comprising the audio sub-item 104 in the source language followed by the audio sub-item 106 and possibly further followed by one or more audio sub-items 106' in the target language. The audio-visual items may be provided, together with further information pertaining to respective learning items, in a database accessible by the language learning application. The database and/or information that enables the language learning application to access the database is, typically, provided together with the language learning application. The database is typically stored in a memory or a mass storage device of the computer-apparatus running the language learning application. Alternatively, the database may be stored in a mass storage device connected to the computer apparatus or in a memory or a mass storage device of another apparatus that is accessible by the computer apparatus running the language learning application. Examples of content and structure of such a database are described in the following. It should be noted, however, that the term database as used herein should be construed broadly. In other words, the term database is not only referring to a single data structure expressly referred to as a database but to any data structure capable of storing information in an orderly manner (or to a collection of two or more such data structures).

The information content stored in the database for each language course may comprise e.g. the following information elements for each of the learning items. In the following, for clarity and brevity of description, the term learning item is applied to refer to the information pertaining to a single learning item in general as well as to the information elements of the database pertaining to the single learning item.
- **Audio-visual representation of the learning item** or an identification thereof. This information element may include e.g. a pointer to an encoded audio data or video data stored as a file, representing pre-constructed audio-visual items (e.g. audio items 102 comprising the audio sub-item 104 in the source language followed by the audio sub-item 106 and possibly one or more audio sub-items 106' in the target language).
- **Hierarchy level indication** (e.g. a hierarchy level indicator) to indicate a hierarchy level assigned for the learning item. The hierarchy level indication comprises information that defines the hierarchical role of this learning item with respect to other learning items, thereby (at least in part) serving as a role describer for this learning item. The hierarchy level may also serve as a difficulty level that is indicative of the difficulty of this learning item with respect to other learning items.
- **Status indication** (e.g. a status indicator) to indicate inclusion in or exclusion from the current learning session and/or in or from a subsequent learning session. The status indication may be provided as a single indicator directly indicating the inclusion or exclusion of the respective learning item. As another example, the status indication may comprise a first status indicator to indicate exclusion or inclusion in accordance with an automated exclusion rule or an inclusion rule and a second status indicator to indicate inclusion or exclusion in accordance with user selection. The exclusion rule, the inclusion rule and the user selection(s) in this regard will be described in more detail later in this text.

The information content stored in the database for each language course may further comprise e.g. the following information elements for at least some of the learning items.
- **Identifier (ID)** assigned to the language item (in context of the language course). The identifier may comprise for example a sequence number.
- **Dependency indication** (e.g. a dependency indictor) to indicate dependency between this learning item and one or more other learning items. The dependency indicator may refer to other learning items e.g. by using their IDs. The dependency indicator may be employed to indicate, for example, that this learning item is an alternative to one or more other learning items of the same hierarchy level, thereby implying that only one of these learning items should be included in a single learning session. Alternatively, the dependency indicator may be employed to indicate that this learning item is to be handled jointly with one or more other learning items, thereby implying that this learning item and the other learning item(s) should be included in or excluded from a single learning session together. However, the information carried by the dependency indicator can be, alternatively or additionally, provided by using the hierarchy level indicator, as will be described by an example in the following.
- **Inclusion counter** to indicate the number of preceding learning sessions of the current language course in which this learning item has been included.
- **The information content of the learning item in writing** (e.g. as text) in the source language and/or in the target language.
- **An image** descriptive of the information content of the learning item.

The learning items for a learning session are selected in accordance with a predetermined selection rule. The selection rule is arranged to select learning items from the database in a selection order in view of the status indications of the learning items. The selection order may be defined by information stored in the database. Further details of exemplifying selection rules will be described in more detail later in this text.

The selection order may be defined by the order in which the learning items are available in the database. In other words, if the learning items of the database are stored as an ordered list (e.g. a rows of a table), the selection rule is arranged to consider the learning items in the order they are provided in the list (in the table). As another example, the selection order may be defined by the IDs assigned to the learning items. In this regard, the selection rule may be arranged to consider the learning items e.g. in increasing order of IDs or in decreasing order of IDs.

The above-described examples of the selection order facilitate providing learning sessions exhibiting a structure that facilitates efficient learning. As an example in this regard, a subset of learning items that are consecutive in the selection order may be arranged to provide a learning module, and the learning material may be arranged to provide a plurality of such learning modules. To illustrate such an approach by a non-limiting example, in an exemplifying learning material the learning items of the database exhibit one of hierarchy levels from 1 to 3, where the learning items at a hierarchy level 1 comprise basic single words, where learning items at a hierarchy level 2 comprise expressions and/or relatively simple basic sentences, and where learning items at a hierarchy level 3 comprise core sentences and/or combinations of sentences. The core sentences are typically more complex (in terms of their structure and/or in terms of vocabulary applied therein) than the basic sentences. Moreover, the information content of the core sentences may represent language concepts that are essentially important for learning the target language and/or understanding the topic under study (in view of the current language course). Furthermore, the core sentences and/or the combinations of sentences of the hierarchy level 3 may, alternative or additionally, constitute crucial part(s) of a narrative (or a storyline) provided as part of the information content of the language course.

In the framework of this example, a single learning module may include one or more single words (hierarchy level 1) related to the learning module, followed by one or more expressions and/or basic sentences ( hierarchy level 2) applying these one or more words (possibly together with further words), further followed by one or more core sentences ( hierarchy level 3) applying these one or more words and/or sentences (possibly together with further words and/or sentences). The learning items belonging to a single learning module are arranged in the database such that they are consecutive in the selection order applied by the selection rule in increasing order of the hierarchy level. Consequently, the single learning module is arranged to facilitate step-by-step learning of words and basic sentences that facilitate learning or understanding the information content of the core sentence(s) of the learning module. Moreover, the core sentences of the hierarchy level 3 (i.e. the highest hierarchy level) across the learning modules, in their selection order, may represent information content that is essential for understandability of the learning material in its entirety (e.g. the narrative or the storyline provided as part of the information content of the language course), whereas the learning items of the hierarchy levels 1 and 2 (i.e. the hierarchy levels lower than the highest one) may represent non-essential elements of the learning material that introduces and/or complements the information content of the learning material represented by the learning items of the hierarchy level 3 within the same learning module. Consequently, with such an arrangement of the learning material, the learning items of the highest hierarchy level are preferably kept in the learning material in the same order in all learning sessions of the language course in order to ensure presenting the essential information content to the user (e.g. in order not to blur the understandability of the narrative or storyline) while learning items of lower hierarchy levels may be excluded from some learning sessions without overlooking any essential elements of the information content (e.g. without blurring the understandability of the narrative or the storyline).

Table 1 below illustrates the concept of learning modules by a non-limiting example. The example indicates, for a number of learning items, the ID, the hierarchy level (HL), the information content in writing in Finnish (the source language, SL) and the information content in writing in English (the target language, TL)

**Table 1**

| **ID** | **HL** | **text in SL** | **text in TL** |
|---|---|---|---|
| 1 | 1 | mina | I |
| 2 | 1 | haluta | to want |
| 3 | 1 | oppia | to learn |
| k | | | |
| k+1 | 2 | minä haluan | I want |
| k+2 | 2 | minä haluan oppia | I want to learn |
| ... | | | |
| I | 3 | Haluan oppia englannin kielen, koska haluan pu- hua uusien ihmisten kanssa | I want to learn the English language because I want to speak with new people |
| I+1 | 1 | yleinen | common |
| ... | | | |
| m | 2 | yleisin | the most common |
| m+1 | 2 | on yleisin | is the most common |
| ... | | | |
| n | 3 | Englannin kieli on maailman yleisin kieli, joten se on tähän tarkoitukseen paras. | The English language is the most common language in the world, so it is the best one for this purpose. |
| ... | | | |

In the Table 1 above the learning items with the ID from 1 to I constitute a first learning module, comprising single words (for which HL = 1) and expressions/basic sentences (for which HL = 2) building up to the first core sentence (for which HL = 3). Along similar lines, the learning items with the ID from I+1 to n constitute a second learning module, again comprising single words (HL = 1) and expressions (HL = 2) building up to the respective core sentence (HL = 3). For clarity and brevity of illustration, only some of the learning items of each hierarchy level are shown and hence in this example not all words or expressions applied in the core sentences (HL = 3) are not introduced as learning items of HL = 1 and HL = 2.. In other words, for each learning module, further single words (HL = 1) and/or further expression/basic sentences (HL = 2) may be provided to introduce words, expressions and/or concepts applied in the core sentence(s) (HL = 3) of the respective learning module.

In the above example introducing one or more learning modules into the learning material, the selection order of the learning items within a learning module is the increasing order of hierarchy level. As a further example regarding the selection order, the applied selection order across all learning items of the database may be defined by the hierarchy levels assigned to the learning items. In this regard, the selection order may an increasing order of hierarchy levels. Moreover, the selection rule may be arranged to consider the learning items of the same hierarchy level e.g. in the order they are available in the database, in the increasing order of IDs or in a random order. Consequently, when applying the hierarchy level based selection order the learning material for a language course is, conceptually, arranged into a single learning concept that proceeds from learning items of the lowest hierarchy level towards learning items of the highest hierarchy level.

The database for a given language course may be provided with an initial setting where all learning items of the database are indicated for inclusion to subsequent learning sessions by using the status indication described in the foregoing. Alternatively, the initial setting may comprise a mixture of learning items indicated for inclusion in the subsequent learning session(s) and learning items indicated for exclusion from the subsequent learning session(s). When the user studies the language course, e.g. by taking one or more learning sessions, some of the learning items initially indicated for inclusion may be changed to exclusion by an automated exclusion rule, whereas some of the learning items initially indicated for exclusion may be changed to inclusion by an automated inclusion rule. Examples of the exclusion and inclusion rules will be described later in this text.

Application of the exclusion rule (after one or more learning sessions) contributes to excluding learning material the user has already studied and hence serves to avoid repetition of the learning material the user already knows from one learning session to another. Indicating some of the learning items for exclusion in the initial setting and subsequent application of the inclusion rule (after one or more learning sessions) serves to further increase variation of the learning material by introducing learning items that the user has not studied in preceding learning session(s) and/or by re-introducing some of the learning items the user has studied in one or more preceding learning sessions,

The GUI, e.g. the GUI window 200, may further comprise a control button or a selection mechanism of other type for initiating a procedure for selecting learning items for a learning session in accordance with the selection rule. Once the selection procedure is carried out, the audio items and/or the video items (in other words, the audio-visual items) associated with the selected learning items are provided, in the order they have been selected, for presentation to the user as the audio and/or video component of the learning session. The presentation to the user may comprise presenting the audio and/or video items to the user as an audio-visual component of a language learning session, e.g. playing back the audio via loudspeakers or headphones connected to the computer apparatus and/or rendering the video on the display of the computer apparatus. As another example, the presentation to the user may comprise creating a composite audio file and/or a composite video file (in other words, a composite audio-visual file) for subsequent reproduction to the user as the audio-visual component of a language learning session.

The selection mechanism, when initiated, provides the user with a possibility to enter (via the GUI) a preferred duration for the learning session to be created. The language learning application is arranged to apply, in response to receiving the user-initiated request to select the learning items for the learning session and the user-defined (i.e. user-selected) preferred duration thereof, the selection rule to select the learning items and to provide the audio-visual items associated with the selected learning items for reproduction (or presentation) to the user.

The selection rule is arranged to make use of the selection order in combination with the status indication of the learning items stored in the database together with the information that identifies the corresponding audio-visual item. In particular, the selection rule is arranged to consider the learning items in the selection order and to select learning items that not indicated for exclusion. The selection process is continued until reaching a combined duration of audio-visual items that matches the user-selected preferred duration. Depending on the applied approach, the selection rule may select audio-visual items in the selection order until the combined duration that is at least the preferred duration, or until the combined duration that is as close as possible to the preferred duration while not exceeding the preferred duration.

As briefly referred to in the foregoing, the language learning application may be configured to apply an automated exclusion rule to change the status of some learning items from inclusion to exclusion. The GUI, e.g. the GUI window 200, may be provided with means for enabling and/or disabling the exclusion rule, e.g. a control button that toggles between the enabled and disabled states of the exclusion rule. If the possibility to apply the exclusion rule is provided and the exclusion rule is enabled, the language learning application may be arranged to apply the exclusion rule in response to having carried out the selection of the learning items for a learning session. Hence, the changed inclusion/exclusion status of the learning items affected by the operation of the exclusion rule takes an effect in the learning item selection process carried out for subsequent learning sessions.

The automated exclusion rule may be arranged to change the status indication from inclusion to exclusion for a desired amount of learning items that are currently indicated for inclusion. The exclusion rule is, preferably, restricted to consider the learning items selected for the most recent learning session or restricted to consider the learning items selected at least for one of the preceding learning sessions to avoid excluding learning items that are indicated for inclusion but that have not yet been selected for any of the learning session.

As a general rule of operation, the exclusion rule is arranged to consider the learning items in an exclusion order until the desired amount learning items are changed from inclusion to exclusion. As an example in this regard, the exclusion rule may be arranged to consider the learning items under consideration one by one, to skip the learning items already indicated for exclusion and to carry out modification of the inclusion/exclusion status for the learning items currently indicated for inclusion.

The exclusion order may be the order in which the learning items are available in the database. As another example, the exclusion order may be defined by the IDs assigned to the learning items, e.g. an increasing order of IDs or a decreasing order of IDs. As a further example, the exclusion order may be an increasing order of hierarchy level. To complement the hierarchy level based exclusion order, the exclusion rule may be arranged to consider the learning items of the same hierarchy level e.g. in the order they are available in the database, in the increasing order of IDs or in a random order. The exclusion order is not necessarily the same as the selection order.

As a variation of the above-described exclusion approach, the exclusion rule may be arranged to refrain from excluding any learning items of the highest hierarchy level or any learning items of a predetermined number of highest hierarchy levels.

The desired amount of to-be-excluded learning items may be defined as a predefined or user-selectable number of learning items. As another example, the desired amount may be defined as a predefined or user-selectable percentage of the number of learning items that were selected in most recent preceding selection of learning items. As a further example, the desired amount may be selected as a predefined or user-selectable combined duration of learning items to be excluded. As a yet further example, the desired amount may be defined as a user-selectable or predefined percentage of the duration of the most recently selected preceding learning session.

The exclusion rule may be further arranged to take into account possible dependencies between the learning items. The dependencies may be indicated e.g. by using the dependency identifier described in the foregoing or on basis of hierarchy levels dedicated for indicating possible dependencies between learning items.

In this regard, consider the above example of the hierarchy level 1 employed to indicate learning items comprising single words, the hierarchy level 2 employed to indicate learning items comprising the basic sentences and the hierarchy level 3 employed to indicate learning items comprising the core sentences. In the framework of this example, the hierarchy level also serves as a difficulty level indicator. In order to bring in the dependency information, for each learning item of the hierarchy level 1 and/or the hierarchy level 2, the dependency indicator may be employed to indicate one of the following:
- no dependency to any other learning item,
- identification(s) (e.g. the IDs) of one or more learning items that are to be excluded or included together with this learning item, or
- identification(s) (e.g. the IDs) of one or more learning items that are alternatives to this learning item.

As another example, the above example making use of the hierarchy levels from 1 to 3 may be modified such that there are dedicated hierarchy levels for indicating the possible dependencies between learning items. In this regard, a hierarchy level 1 may be employed to indicate learning items comprising single words, a hierarchy level 2 may be employed to indicate learning items comprising single words that are to be jointly excluded/included with one or more other learning items, a hierarchy level 3 may be employed to indicate learning items comprising single words that are alternatives to one or more other learning items, a hierarchy level 4 may be employed to indicate learning items comprising the basic sentences and a hierarchy level 5 may be employed to indicate learning items comprising the core sentences. With these exemplifying hierarchy/dependency definitions,
- the hierarchy levels 1, 4 and 5 indicate that there is no dependency to any other learning item,
- a sequence of consecutive learning items of the hierarchy level 2 (in the selection order) indicate that the learning items of this sequence are to be jointly excluded or included, and
- a sequence of consecutive learning items of the hierarchy level 3 (in the selection order) indicate that the learning items of this sequence are alternatives to each other.

Consequently, the dependency information is provided as part of the hierarchy level information and hence it is not necessary to employ dedicated dependency indicators. On the other hand, in this modified example the hierarchy level may not directly indicate the difficulty level but the hierarchy levels 1, 2 and 3 may be considered to represent the same or essentially the same level of difficulty.

The modified example described in the foregoing may be further varied in a number of ways, e.g. by employing the dependencies of the type applied for the single words in the hierarchy levels 2 and 3 also to introduce corresponding dependency types for the basic sentences or by employing only two or more than three different difficulty levels.

As an example of taking into account the possible dependency between learning items, in case the dependency information (e.g. explicitly indicated by the dependency indicator or implied by the hierarchy indicator) for a given learning item selected for exclusion indicates that there are one or more learning items that jointly included or excluded with the given learning item, the exclusion rule may be arranged to exclude also the learning item(s) that depend on the given learning item together with the given learning item. As another example, in case the dependency information for a given learning item selected for exclusion indicates that the given learning item is an alternative for one or more other learning items, the exclusion rule may be arranged to include one of the alternative learning items when excluding the given learning item. If there are several alternative learning items, the exclusion rule may be arranged to select the one to be included randomly. As a variation of including one of the alternatives to replace a given learning item selected for exclusion, the exclusion rule may be arranged to select an alternative learning item that has not been selected for any of the preceding learning sessions (which information may be obtained e.g. from the inclusion counter(s) pertaining to the respective learning item(s)).

As briefly mentioned in the foregoing, the language learning application may be configured to apply an automated inclusion rule to change status of some learning items from exclusion to inclusion. The inclusion rule may be arranged to re-introduce some of the learning items already selected for one or more preceding learning sessions of the current language course for selection into subsequent learning sessions.

The GUI, e.g. the GUI window 200, may be provided with means for enabling and/or disabling the inclusion rule, e.g. a control button that toggles between the enabled and disabled states of the inclusion rule. If the possibility to apply the inclusion rule is provided and the inclusion rule is enabled, the language learning application may be arranged to apply the inclusion rule in response to having carried out the selection of the learning items for a learning session. Hence, the changed inclusion/exclusion status of the learning items affected by the operation of the exclusion rule takes an effect in the learning item selection process carried out for subsequent learning sessions.

The automated inclusion rule may be arranged to re-introduce a desired amount of learning items to a subsequent learning session. Selection of a language item to one or more preceding learning session of the current language course may be indicated e.g. by the inclusion counter possibly stored in the database, as described hereinbefore. The re-introduction may be carried out by modifying the database by changing the status indication of the respective learning items from exclusion to inclusion.

The desired amount of to-be-re-introduced learning items may be defined as a predefined or user-selectable number of learning items. As another example, the desired amount of learning items to be reintroduced may be defined as a predefined or user-selectable percentage of the number of learning items that were selected for the most recently selected preceding learning session. As a further example, the desired amount may be selected as a predefined or user-selectable combined duration of learning items to be reintroduced. As a yet further example, the desired amount may be defined as a user-selectable or predefined percentage of the duration of the most recently selected preceding learning session.

The inclusion rule may be independent of the hierarchy levels of the to-be-re-introduced learning items, e.g. such that the re-introduced learning items are selected randomly across hierarchy levels, thereby resulting (on average) even distribution of hierarchy levels in the re-introduced learning items. Alternatively, the inclusion rule may be arranged to take into account the hierarchy levels in re-introduction of learning items e.g. such that learning items of one or more predefined hierarchy levels are excluded from consideration by the inclusion rule or such that learning items of one or more predefined hierarchy levels are considered by the inclusion rule.

The inclusion rule may be further arranged to take into account the dependencies between the learning items. In this regard, the dependency information between learning items may be indicated e.g. by the dependency indicator or by the hierarchy indicator as described in the foregoing. As an example, in case the dependency information for a given learning item to be re-introduced indicates that there are one or more learning items that depend on (inclusion of) the given learning item, the inclusion rule may be arranged to include also the learning item(s) that depend on the given learning item together with the given learning item.

The language learning application may further enable user-initiated inclusion or exclusion of learning items. In this regard, the GUI, e.g. the GUI window 200, may be provided with means for activating a selection mechanism that enables the user to make his/her selection(s) with respect to including and/or excluding one or more learning items from subsequent learning sessions of the current language course. The selection mechanism may be provided e.g. by causing the display of the computer apparatus to display a list of learning items such that their current inclusion status is indicated to the user. The current inclusion status does not indicate the actual selection of the respective learning item in the following learning session but indicates its availability status (i.e. included or excluded) for selection (by the selection rule) to be included in the next learning session. The current inclusion status may be, for example, one of the following
- Available for inclusion in the next learning session due to operation of the inclusion rule;
- Available for inclusion in the next learning session due to user selection;
- Available for inclusion in the next learning session by default as an initial setting in the beginning of the language course;
- Unavailable for inclusion in the next learning session due to operation of the exclusion rule;
- Unavailable for inclusion in the next learning session due to user-selection;
- Unavailable for selection in the next learning session by default as an initial setting in the beginning of the language course (e.g. due to being indicated as an alternative to one of the currently included learning items);

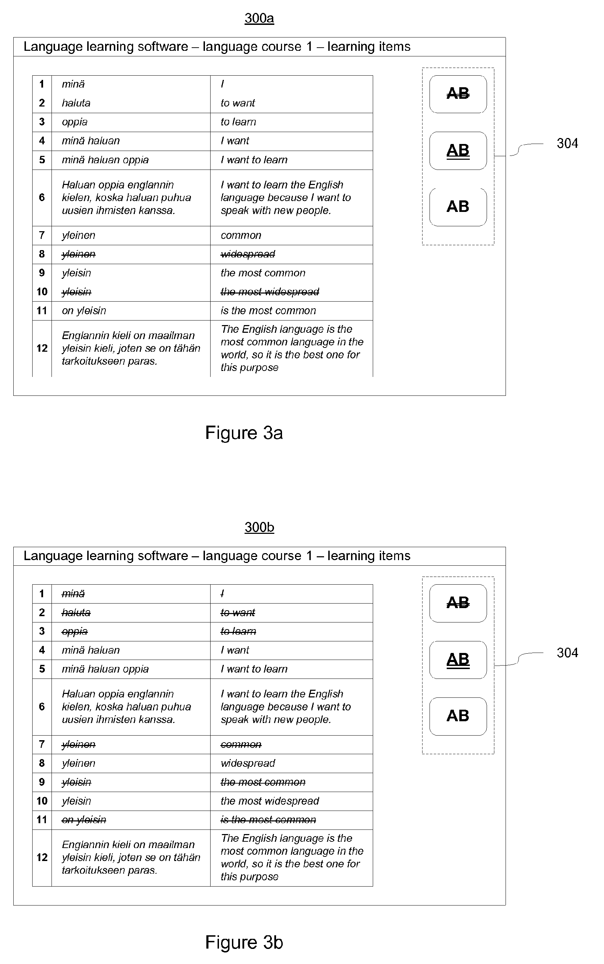

Figures 3a to 3c schematically illustrate examples of such lists of learning items with their inclusion statuses indicated. Figure 3a illustrates a GUI window 300a indicating the initial setting of the inclusion statuses of the learning items. In the GUI window 300a, the learning items marked as available for inclusion in the next learning session are indicated as text in italics, whereas learning items marked as unavailable for inclusion are indicated by strikethrough. The learning items with ID values 1 to 7, 9, 11, and 12 are the learning items with ID values 1 to 10 of the example of Table 1, respectively, whereas the learning items with ID values 8 and 10 are alternatives to the learning items with ID values 7 and 9, respectively. Initially (as a default setting) the learning items identified by ID values 1 to 7, 9, 11 and 12 are available for inclusion in the next learning session (by operation of the selection rule), whereas the learning items with ID values 8 and 10 are unavailable for inclusion due to being alternatives the learning items with ID values 7 and 9, respectively.

The GUI window 300a comprises learning item control buttons 304 for user-initiated controlling the handling of the learning items in selection by the selection rule for the next learning session. The learning item control buttons 304 of this example (from top to bottom in the illustrations of Figures 3a to 3c) comprise a control button for marking the currently selected learning item of the list for exclusion from the next learning session, a control button for making the currently selected learning item of the list for inclusion in the next learning session and a control button for restoring the default setting for the currently selected learning item of the list with regards to its inclusion in or exclusion from the next learning session.

Figure 3b illustrates a GUI window 300b providing an example of the inclusion statuses after operation of the exclusion rule after having selected the learning items for a(t least one) learning session (by operation of the selection rule). As in the GUI window 300a, also in the GUI window 300b the learning items marked as available for inclusion in the next learning session are indicated as text in italics, whereas learning items marked as unavailable for inclusion are indicated by strikethrough. In the example of Figure 3b, the operation of the exclusion rule has changed the status of all learning items of the hierarchy level 1 and some of the learning items of the hierarchy level 2. In particular, the learning items with ID values 1 to 3, 7, 9 and 11 have been made unavailable for inclusion in the next learning session. On the other hand, the learning items 8 and 10, formerly excluded due to being alternatives to the learning items 7 and 9, respectively, have been made available for inclusion in the next learning session.

Upon viewing the list, the user may use an input device of the computer apparatus to mark one or more learning items of the list for inclusion in subsequent learning session(s) and to mark one or more learning items of the list for exclusion from subsequent learning session(s). Consequently, the language learning application may receive user selection regarding inclusion or exclusion of one or more learning items from a subsequent learning session in response to the user indicating the modification of the list to be completed. Alternatively, instead of receiving the inclusions/exclusions indicated via the list, the language learning application may receive an indication regarding user-selection to exclude a learning item from a subsequent learning session in response to user activating the leftmost one of the learning item control buttons 204 of the GUI window 200. Along similar lines, the language learning application may receive an indication regarding user-selection to include a learning item in a subsequent learning session in response to user activating the middle one of the learning item control buttons 204 of the GUI window 200. Consequently, in response to receiving the user-selection to include or exclude one or more learning items from a subsequent learning session, the language learning application may modify the content of database with respect to the status indications accordingly.

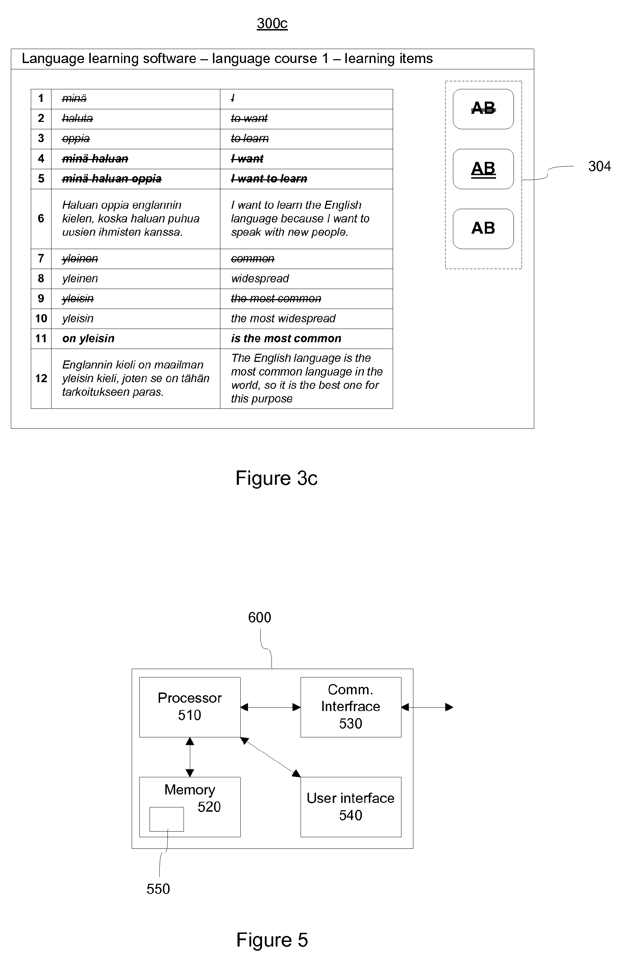

As an example in this regard, Figure 3c illustrates a GUI window 300c providing an example of the inclusion status after exemplifying user selections. In the GUI window 300c, the user-selected inclusion statuses are shown in bold text (in italics), whereas the automated selection by operation of the exclusion rule are shown in normal text (in italics). In comparison to the GUI window 300b, the inclusion status of the learning items with ID values 4 and 5 have been changed in response to a user operation (e.g. by the user operating the topmost of the learning item control buttons 304) from available for inclusion to unavailable for inclusion (e.g. from inclusion to exclusion) to reflect user-indicated preference in this regard. Moreover, the inclusion status of the learning item with ID value 11 has been changed in response to a user operation (e.g. by the user operating the middle one of the learning item control buttons 304) from unavailable for inclusion to available for inclusion to reflect the user-indicated preference in this regard.

If the language learning application enables the user-initiated inclusion or exclusion of language items, the user-selection prevails over inclusion or exclusion due to the automated inclusion/exclusion rule. Moreover, if the user-initiated inclusion/exclusion is available for the user, the database is preferably arranged to provide (at least) two separate status indicators for each learning item to enable telling the user-selected inclusion/exclusion status from the automatically selected one: a first status indicator to indicate inclusion/exclusion as the initial setting and/or in accordance with the inclusion or exclusion rule and a second status indicator to indicate inclusion/exclusion by user-selection.

As briefly referred to in the foregoing, the language learning application may be configured to arrange the audio-visual items associated with the selected learning items that constitute a single learning session into the composite audio-visual file. Providing a learning session in a dedicated stand-alone audio-visual file enables playing back the file using a device other than the computer apparatus running the language learning application. Consequently, the user may study the learning session without a need for continuous access to the computer apparatus running the language learning application.

Each of the audio-visual items is, typically, stored as respective one or more files comprising encoded media components. The encoded media components may comprise an encoded audio signal, an encoded video signal or a combination of the two, representing the information content of the respective learning item. Arranging the audio-visual items into the composite audio-visual file comprises concatenating the encoded signals pertaining to the selected learning items into the composite audio-visual file.

As an example, if audio only material is employed, each audio-visual item may be provided as an audio file comprising the respective encoded audio signal. Consequently, arranging the audio-visual items into the composite audio-visual file may comprise concatenating encoded audio components provided in the audio files corresponding to the selected learning items into a concatenated encoded audio signal and storing the concatenated encoded audio signal into a composite audio file. Some encoded audio formats are stored in respective audio files using a structure comprising a header that is followed by the encoded audio signal. The header typically contains information regarding characteristics of the encoded audio signal. For such audio formats the arrangement into the composite audio file may comprise discarding the headers of the individual audio files, concatenating the encoded audio signals into a concatenated encoded audio signal (in the order the respective learning items have been selected), creating a header for the composite audio file and storing the created header and the concatenated encoded audio signal into the composite audio file. An example of encoding exhibiting such format is MP3 audio encoded at constant bit-rate.

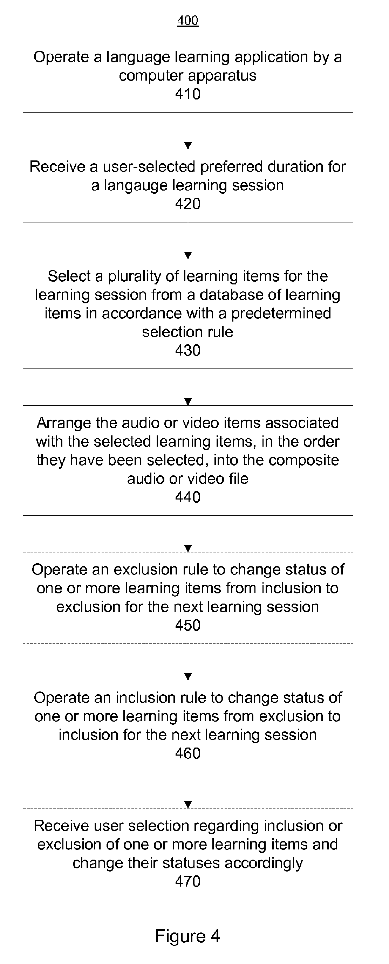

The operations, procedures and/or functions described in context of the language learning application and/or the GUI may be also described as steps of a method. As an example in this regard, Figure 4 depicts a flowchart illustrating an exemplifying method 400 for generating a composite audio or video file for reproduction to the user as an audio or video component of a learning session.

The method 400 proceeds from operating and/or providing (e.g. 'running') the language learning application in a computer apparatus, as indicated in block 410. The method 400 further comprises receiving a user-selected preferred duration for the learning session, as indicated in block 420. The user-preferred duration may be received e.g. via the GUI of the language learning application, as described in the foregoing.

The method 400 further comprises selecting a plurality of learning items for the learning session from the database of learning items in accordance with a predetermined selection rule, as indicated in block 430. As described in the foregoing, each learning item of the database is provided at least with an audio or video item representing audio or video associated therewith, the hierarchy level indication for indicating the hierarchical role assigned for the learning item and the status indication for indicating one of inclusion in or exclusion from the learning session. As also described in the foregoing, the selection rule is arranged to select learning items that are currently not indicated for exclusion from the learning session in the selection order until reaching a combined duration of audio or video items that matches the user-selected preferred duration.

The method 400 further comprises arranging the audio or video items associated with the selected learning items, in the order they have been selected, into the composite audio or video file for reproduction to the user as the audio or video component of the learning session.

The method 400 may further comprise automatically modifying the database in accordance with the exclusion rule in order to change the status indication of one or more learning items that have been selected for the learning session from inclusion to exclusion in the exclusion order, as indicated in block 450. The number of learning items changed from inclusion to exclusion, hence to be excluded from the next learning session, may be derived on basis of a user-selectable percentage of learning items selected for the most recently defined learning session (defined by operation of the selection rule). The examples of the exclusion rule and operation thereof are described in the foregoing.

The method 400 may further comprise automatically modifying the database in accordance with the inclusion rule in order to change the status indication of one or more learning items from exclusion to inclusion, as indicated in block 460. As described in the foregoing, the inclusion rule is arranged to change the status indication of one or more learning items that are currently indicated for exclusion from a learning session but that have been included in at least one preceding learning session from exclusion to inclusion, e.g. at a user-definable probability. Further examples of the inclusion rule and operation thereof are described in the foregoing.

The method 400 may further comprise receiving user selection regarding inclusion or exclusion of one or more learning items in/from a subsequent language learning session and modifying the database by changing the status indications of said one or more learning items accordingly, as indicated in block 470. This user selection may be received via the GUI, e.g. via any of the GUI windows 200, 300a, 300b and 300c, as described in the foregoing.

The order of processing steps represented by the blocks 410 to 470 of Figure 4 may be varied from the one shown therein. As an example, the operation of the inclusion rule (block 460) may be invoked before operation of the exclusion rule (450). Alternatively or additionally, the operation of the exclusion rule and the inclusion rule may be invoked e.g. after having received the user-selected preferred duration (block 420) but before selection of the learning items (block 430). Alternatively or additionally, receiving the user selection of inclusion or exclusion of learning items (block 470) may take place before having received the user-selected preferred duration (block 420), before selection of the learning items (block 430) or before operation of the exclusion rule (block 450) and/or the operation of the inclusion rule (460). Moreover, the processing steps represented by the blocks 410 to 470 may be varied in a number of ways, e.g. as described in the foregoing in context of the language learning application.

Figure 5 schematically illustrates an exemplifying apparatus 500 upon which an embodiment of the invention may be implemented. The apparatus 500 as illustrated in Figure 5 provides a diagram of exemplary components of an apparatus, which is capable of operating as or providing the language learning application according to an embodiment. The apparatus 500 comprises a processor 510 and a memory 520. The processor 510 is configured to read from and write to the memory 520. The apparatus 500 may further comprise a communication interface 530, such as a network card or a network adapter enabling wireless or wireline communication with another apparatus and/or radio transceiver enabling wireless communication with another apparatus over radio frequencies. The apparatus 500 may further comprise a user interface 540 for providing data, commands and/or other input to the processor 510 and/or for receiving data or other output from the processor 510, the user interface 540 comprising for example one or more of a display, a keyboard or keys, a mouse or a respective pointing device, a touchscreen, a touchpad, etc. The apparatus 500 may comprise further components not illustrated in the example of Figure 5.

Although the processor 510 is presented in the example of Figure 5 as a single component, the processor 510 may be implemented as one or more separate components. Although the memory 520 in the example of Figure 5 is illustrated as a single component, the memory 520 may be implemented as one or more separate components, some or all of which may be integrated/removable and/or may provide permanent / semi-permanent/ dynamic/cached storage.

The apparatus 500 may be embodied, for example, as an electronic device equipped with processing capacity sufficient to carry out operations, procedures and/or functions described in context of the language learning software in the foregoing. As a non-limiting example, such a device may be provided as a computer apparatus, such as a laptop computer, a desktop computer or a tablet computer, a mobile phone, a smartphone, a music player, a media player, a gaming device, a personal digital assistant (PDA), etc.

The memory 520 may store a computer program 550 comprising computer-executable instructions that control the operation of the apparatus 500 when loaded into the processor 510. As an example, the computer program 550 may include one or more sequences of one or more instructions. The computer program 550 may be provided as a computer program code. The processor 510 is able to load and execute the computer program 550 by reading the one or more sequences of one or more instructions included therein from the memory 520. The one or more sequences of one or more instructions may be configured to, when executed by one or more processors, cause an apparatus, for example the apparatus 500, to carry out operations, procedures and/or functions described hereinbefore in context of the language learning application.

The memory 520 may further store the database storing the he audio-visual items together with further information pertaining to respective learning items. Alternatively or additionally, the apparatus 500 may comprise a mass storage device or the apparatus may be connected to a mass storage device storing the database. As a further example, the database may be stored in a memory or a mass storage device of another apparatus that is accessible by the apparatus 500 via the communication interface 530.

Hence, the apparatus 500 may comprise at least one processor 510 and at least one memory 520 including computer program code for one or more programs, the at least one memory 520 and the computer program code configured to, with the at least one processor 510, cause the apparatus 500 to perform operations, procedures and/or functions described hereinbefore in context of the language learning application.

The computer program 550 may be provided at the apparatus 500 via any suitable delivery mechanism. As an example, the delivery mechanism may comprise at least one computer readable non-transitory medium having program code stored thereon, the program code which when executed by an apparatus cause the apparatus at least to carry out operations, procedures and/or functions described hereinbefore in context of the language learning application. The delivery mechanism may be for example a computer readable storage medium, a computer program product, a memory device, a record medium such as a CD-ROM, a DVD, a Blue-Ray disc or another article of manufacture that tangibly embodies the computer program 550. As a further example, the delivery mechanism may be a signal configured to reliably transfer the computer program 550. The database may be provided at the apparatus e.g. by using one of the mechanisms described in the foregoing for provision of the computer program 550. The database may be provided together with the computer program 550 or it may be provided independently of the computer program 550.

Reference to a processor should not be understood to encompass only programmable processors, but also dedicated circuits such as field-programmable gate arrays (FPGA), application specific circuits (ASIC), signal processors, etc.Features described in the preceding description may be used in combinations other than the combinations explicitly described. Although functions have been described with reference to certain features, those functions may be performable by other features whether described or not. Although features have been described with reference to certain embodiments, those features may also be present in other embodiments whether described or not.

## Claims

1. An apparatus for generating a composite audio or video file for reproduction to a user as an audio or video component of a learning session, the apparatus comprising at least one processor and at least one memory including computer program code for one or more programs, the at least one memory and the computer program code configured to, with the at least one processor, cause the apparatus at least to
receive a user-definable preferred duration for the learning session,
select one or more learning items from a database of learning items for said learning session in accordance with a predetermined selection rule, wherein each learning item of the database is provided at least with
an audio or video item representing audio or video associated therewith, and
a status indication for indicating one of inclusion in or exclusion from the learning session,
which predetermined selection rule is arranged to select learning items that are currently not indicated for exclusion from the learning session in a predefined selection order until reaching a combined duration of audio or video items that matches the preferred duration, and
arrange the audio or video items associated with the selected learning items, in the order they have been selected, into the composite audio or video file for reproduction to the user as the audio or video component of the learning session.

2. An apparatus according to claim 1, further caused to automatically modify said database in accordance with an exclusion rule, which exclusion rule is arranged to change the status indication of a user-selectable percentage of learning items that have been selected for said learning session from inclusion to exclusion in a predefined exclusion order.

3. An apparatus according to claim 2,
wherein each learning item of the database is further provided with a hierarchy level indication for indicating the hierarchical role assigned for the learning item, and
wherein the learning items, in the selection order, are arranged into one or more learning modules wherein the learning items within a learning module are arranged in increasing order of hierarchy level.

4. An apparatus according to claim 3,
wherein the learning items of the highest hierarchy level, in the selection order, represent information content that is essential for understandability of the learning material represented by the learning items of the database, and
wherein the learning items of lower hierarchy levels represent non-essential learning material that introduce and/or complement the information content of the learning material represented by the learning items of the highest hierarchy level within the same learning module.

5. An apparatus according to claim 3 or 4,
wherein said predefined exclusion order is an increasing order of hierarchy level, and/or
wherein said exclusion rule is arranged to refrain from excluding learning items of a predetermined number of highest hierarchy levels.

6. An apparatus according to any of claims 1 to 5, further caused to automatically modify said database in accordance with an inclusion rule, which inclusion rule is arranged to change the status indication of learning items, which are currently indicated for exclusion from a learning session but which have been included in at least one preceding learning session, from exclusion to inclusion at a user-definable probability.

7. An apparatus according to any of claims 1 to 6, further caused to
receive a user selection regarding inclusion or exclusion of one or more learning items in/from a subsequent language learning session, and
modify, in response to the user selection, the database by changing the status indications of said one or more learning items accordingly.

8. An apparatus according to any of claims 1 to 7,
wherein said audio or video items are provided as audio or video files comprising respective encoded audio or video signals, and
wherein arranging the audio or video items into the composite audio or video file comprises concatenating said encoded audio or video signals into the composite audio or video file.

9. An apparatus according to any of claims 1 to 8, wherein the audio or video items comprise two parts, including a first part representing a stimulus, which first part is followed by a second part representing a response to said stimulus for memorization by a user.

10. An apparatus according to claim 9, wherein the learning items comprise language learning items, wherein the stimulus represents information content of a respective learning item in a source language and wherein the response represents information content of the respective learning item in a target language.

11. A method for generating a composite audio or video file for reproduction to a user as an audio or video component of a learning session, the method comprising
receiving a user-definable preferred duration for the learning session,
selecting one or more learning items from a database of learning items for said learning session in accordance with a predetermined selection rule, wherein each learning item of the database is provided at least with
an audio or video item representing audio or video associated therewith, and
a status indication for indicating one of inclusion in or exclusion from the learning session,
which predetermined selection rule is arranged to select learning items that are currently not indicated for exclusion from the learning session in a predefined selection order until reaching a combined duration of audio or video items that matches the preferred duration, and
arranging the audio or video items associated with the selected learning items, in the order they have been selected, into the composite audio or video file for reproduction to the user as the audio or video component of the learning session.

12. A method according to claim 11, further comprising automatically modifying said database in accordance with an exclusion rule, which exclusion rule is arranged to change the status indication of a user-selectable percentage of learning items that have been selected for said learning session from inclusion to exclusion in a predefined exclusion order.

13. A method according to claim 12,
wherein each learning item of the database is further provided with a hierarchy level indication for indicating the hierarchical role assigned for the learning item and wherein the learning items, in the selection order, are arranged into one or more learning modules wherein the learning items within a learning module are arranged in increasing order of hierarchy level, and
wherein said predefined exclusion order is an increasing order of hierarchy level and/or wherein said exclusion rule is arranged to refrain from excluding learning items of a predetermined number of highest hierarchy levels.

14. A method according to any of claims 11 to 13, further comprising
receiving a user selection regarding inclusion or exclusion of one or more learning items in/from a subsequent language learning session, and
modifying, in response to the user selection, the database by changing the status indications of said one or more learning items accordingly.

15. A computer program for generating a composite audio or video file for reproduction to a user as an audio or video component of a learning session, the computer program comprising one or more sequences of one or more instructions which, when executed by one or more processors, cause an apparatus at least to
receive a user-definable preferred duration for the learning session,
select one or more learning items from a database of learning items for said learning session in accordance with a predetermined selection rule, wherein each learning item of the database is provided at least with
an audio or video item representing audio or video associated therewith, and
a status indication for indicating one of inclusion in or exclusion from the learning session,
which predetermined selection rule is arranged to select learning items that are currently not indicated for exclusion from the learning session in a predefined selection order until reaching a combined duration of audio or video items that matches the preferred duration, and
arrange the audio or video items associated with the selected learning items, in the order they have been selected, into the composite audio or video file for reproduction to the user as the audio or video component of the learning session.

## Amended claims

### Amended claims in accordance with Rule 137(2) EPC.

1. An apparatus for generating a composite audio or video file for reproduction to a user as an audio or video component of a learning session, which apparatus is arranged to store a database of learning items, wherein each learning item of the database comprises
an audio or video item provided as an audio or video file comprising respective encoded audio or video signal representing audio or video associated with the learning item,
a status indication for indicating one of inclusion in or exclusion from the learning session, and
a hierarchy level indication for indicating the hierarchical role assigned for the learning item,
the apparatus comprising at least one processor and at least one memory including computer program code for one or more programs, the at least one memory and the computer program code configured to, with the at least one processor, cause the apparatus at least to
receive a user-definable preferred duration for the learning session, select one or more learning items from said database for said learning session in accordance with a predetermined selection rule using a predefined selection order, which predetermined selection rule is arranged to select learning items that are currently not indicated, by said status indications, for exclusion from the learning session until reaching a combined duration of audio or video items that matches the preferred duration,
concatenate the encoded audio or video signals representing audio or video associated with the selected learning items, in the order they have been selected, into the composite audio or video file for reproduction to the user as the audio or video component of the learning session, and automatically modify said database in accordance with an exclusion rule, which exclusion rule is arranged to change the status indication of a user-selectable percentage of learning items that have been selected for said learning session from inclusion to exclusion in a predefined exclusion order, wherein said exclusion rule is arranged to refrain from excluding learning items of a predetermined number of highest hierarchy levels.

2. An apparatus according to claim 1,
wherein the learning items, in the selection order, are arranged into one or more learning modules wherein the learning items within a learning module are arranged in increasing order of hierarchy level,
wherein the learning items of the highest hierarchy level, in the selection order, represent information content that is essential for understandability of the learning material represented by the learning items of the database, and
wherein the learning items of lower hierarchy levels represent nonessential learning material that introduce and/or complement the information content of the learning material represented by the learning items of the highest hierarchy level within the same learning module.

3. An apparatus according to claim 1 or 2,
wherein said predefined exclusion order is an increasing order of hierarchy level.

4. An apparatus according to any of claims 1 to 3, further caused to automatically modify said database in accordance with an inclusion rule, which inclusion rule is arranged to change the status indication of learning items, which are currently indicated for exclusion from a learning session but which have been included in at least one preceding learning session, from exclusion to inclusion at a user-definable probability.

5. An apparatus according to any of claims 1 to 4, further caused to
receive a user selection regarding inclusion or exclusion of one or more learning items in/from a subsequent learning session, and
modify, in response to the user selection, the database by changing the status indications of said one or more learning items accordingly.

6. An apparatus according to any of claims 1 to 5, wherein the audio or video items comprise two parts, including a first part representing a stimulus, which first part is followed by a second part representing a response to said stimulus for memorization by a user.

7. An apparatus according to claim 6, wherein the learning items comprise language learning items, wherein the stimulus represents information content of a respective learning item in a source language and wherein the response represents information content of the respective learning item in a target language.

8. A method for generating a composite audio or video file for reproduction to a user as an audio or video component of a learning session, the method comprising
storing a database of learning items, wherein each learning item of the database comprises
an audio or video item provided as an audio or video file comprising respective encoded audio or video signal representing audio or video associated with the learning item,
a status indication for indicating one of inclusion in or exclusion from the learning session, and
a hierarchy level indication for indicating the hierarchical role assigned for the learning item,
receiving a user-definable preferred duration for the learning session, selecting one or more learning items from said database for said learning session in accordance with a predetermined selection rule using a predefined selection order, which predetermined selection rule is arranged to select learning items that are currently not indicated, by said status indications, for exclusion from the learning session until reaching a combined duration of audio or video items that matches the preferred duration, and concatenating the encoded audio or video signals representing audio or video associated with the selected learning items, in the order they have been selected, into the composite audio or video file for reproduction to the user as the audio or video component of the learning session, and automatically modifying said database in accordance with an exclusion rule, which exclusion rule is arranged to change the status indication of a user-selectable percentage of learning items that have been selected for said learning session from inclusion to exclusion in a predefined exclusion order, wherein said exclusion rule is arranged to refrain from excluding learning items of a predetermined number of highest hierarchy levels.

9. A method according to claim 8,
wherein the learning items, in the selection order, are arranged into one or more learning modules wherein the learning items within a learning module are arranged in increasing order of hierarchy level, and
wherein said predefined exclusion order is an increasing order of hierarchy level.

10. A method according to any of claims 8 to 9, further comprising
receiving a user selection regarding inclusion or exclusion of one or more learning items in/from a subsequent learning session, and
modifying, in response to the user selection, the database by changing the status indications of said one or more learning items accordingly.

11. A computer program for generating a composite audio or video file for reproduction to a user as an audio or video component of a learning session, the computer program comprising one or more sequences of one or more instructions which, when executed by one or more processors, cause an apparatus at least to
access a database of learning items, wherein each learning item of the database comprises
an audio or video item provided as an audio or video file comprising respective encoded audio or video signal representing audio or video associated with the learning item,
a status indication for indicating one of inclusion in or exclusion from the learning session, and
a hierarchy level indication for indicating the hierarchical role assigned for the learning item,
receive a user-definable preferred duration for the learning session,
select one or more learning items from said database for said learning session in accordance with a predetermined selection rule using a predefined selection order, which predetermined selection rule is arranged to select learning items that are currently not indicated, by said status indications, for exclusion from the learning session until reaching a combined duration of audio or video items that matches the preferred duration,
concatenate the audio or video signals representing audio or video associated with the selected learning items, in the order they have been selected, into the composite audio or video file for reproduction to the user as the audio or video component of the learning session, and automatically modify said database in accordance with an exclusion rule, which exclusion rule is arranged to change the status indication of a user-selectable percentage of learning items that have been selected for said learning session from inclusion to exclusion in a predefined exclusion order, wherein said exclusion rule is arranged to refrain from excluding learning items of a predetermined number of highest hierarchy levels.
